# EUROPEAN PATENT APPLICATION

(11) **EP 0 911 532 A2**
(43) Date of publication of application: **28.04.1999**
(21) Application number: 98308381.7
(22) Date of filing: 14.10.1998
(51) Int. Cl.: F16B 5/06

(54) **Clip turnbuckle and method of manufacture thereof**

(30) Priority: 14.10.1997 GB 9721632
(71) Applicant: Ross Courtney Limited, Kingswinford, West Midlands DY6 7PP (GB)
(72) Inventor: Johnson, John, Willenhall WV12 5AH (GB)
(74) Representative: Bannerman, David Gardner

(57) **Abstract**

A turnbuckle fastener (10) for use in securing a first part (L) to a second part (P), comprising a body (12) which is angly free to rotate in a hole in the first part and having a head (14) abutting a face of the first part, the body including a through-bore (22) for receiving a spring member and a spring member (24) for abutting the second part thereby to fasten the first and second parts together in co-operation with the head. wherein the spring member includes means (25) for holding it in position with respect to the body (FIG. 2).

## Description

The invention relates to a fastener for clamping two parts or panels together and particularly to a so called turnbuckle fastener which comprises a fastener body and a spring member which when turned through part of a single revolution moves the spring member between engaged and released positions.

Many fasteners of this type do not provide the desired strength for certain applications and do not therefore provide sufficient force on the panels when fastened together. This can be because the amount of leverage through the spring member onto the fastener body causes plastic deformation of the body and/or because of the materials used. Additionally, known fasteners comprise a body and spring member of fairly complex shapes which require considerable manufacturing steps.

It is an object of the present invention to provide a fastener having improved strength and ease of manufacture over known designs.

According to one aspect of the invention there is provided a turnbuckle fastener for use in securing a first part to a second part, comprising a body which is operatively angularly free to rotate in a hole in the first part and having a head abutting a face of the first part in use, the body including a cross through-bore for receiving a spring member, and a laterally projecting spring member for abutting the second part in use thereby to fasten the first and second parts together in co-operation with the head, wherein the spring member includes means for holding it in position with respect to the body. Preferably, the holding means co-operates with part of the body adjacent one end of the through-bore. For example, the holding means can be formed by deforming the spring member adjacent the end of the through-bore, for example by crimping, thereby to deform the member making it difficult to pull that part of the member through the through-bore.

Another aspect of the invention provides a turnbuckle fastener comprising a body with a head and through-bore, and a spring member wherein the body and the member are made of metal. Preferably the body is made from a castable material such as aluminum or mazak and the spring member from spring wire such as spring steel.

Another aspect of the invention provides a turnbuckle fastener with a body having a head and a base with a through-bore and a spring member, wherein the body further comprises a neck portion disposed between the through-bore and head which neck portion has a narrower cross-sectional diameter than the head. Preferably the neck portion has a narrower cross-section diameter than that portion of the body including the through bore.

A further aspect of the invention is to provide a method of assembling a turnbuckle fastener for fastening first and second parts, the fastener having a body with a through-bore and a spring member with first and second ends, the method of assembly comprising the steps of passing the spring member through the bore so that the first end projects from the bore, then forming at least one of the first or second ends to form an engaging portion to co-operate with the associated first or second part to be secured together.

An embodiment of the invention will now be described, by way of example only, with reference to the attached drawings in which:-
FIG. 1 is a side elevation view of a turn buckle fastener according to the invention being inserted into an operable position;
FIG.2 is a side elevation view of the fastener shown in FIG.1 in a fastened position.
FIG.3 is a schematic side elevation view of a spring member or clip for a fastener according to the invention shown without the body for clarity.
FIGS.4,5 & 6 are side elevations and a plan elevation of the body of a fastener according to the invention.

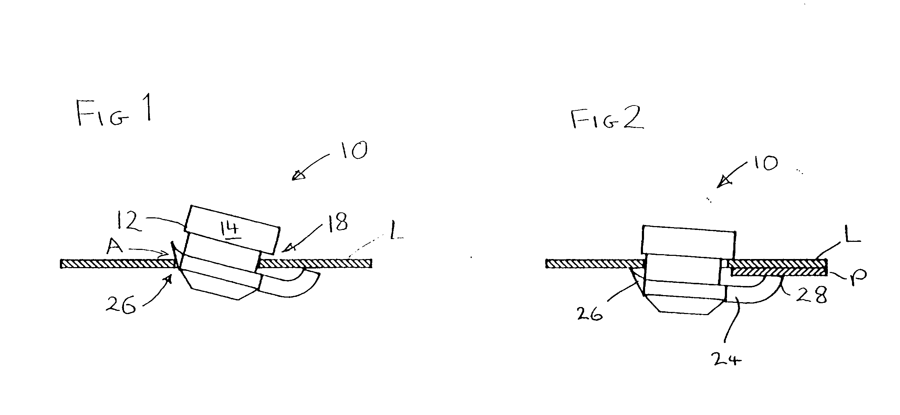

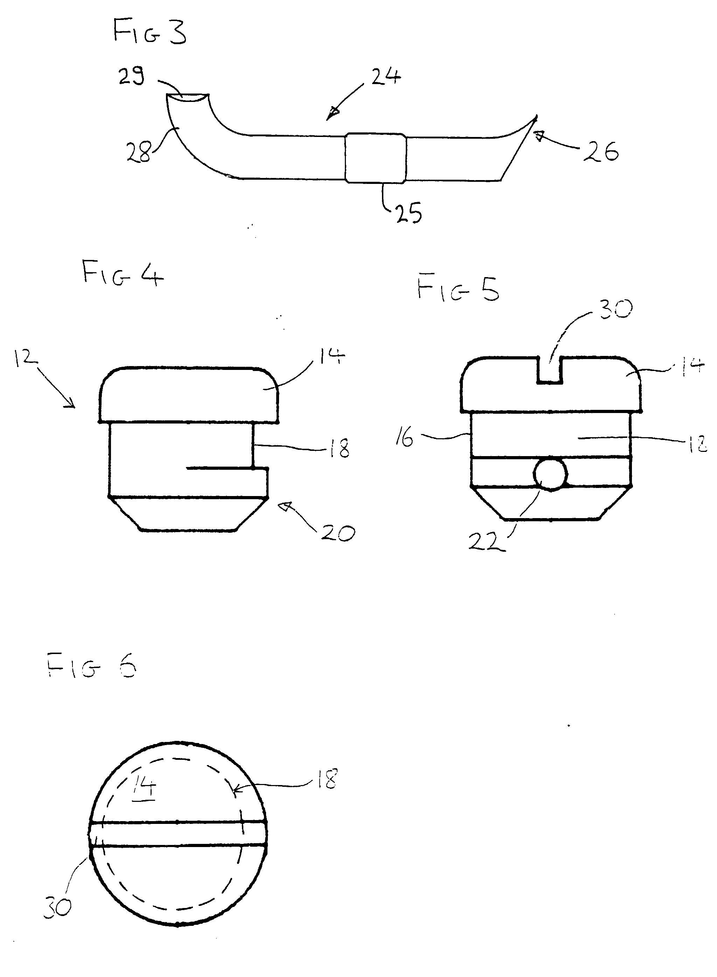

In a preferred form of the invention there is provided a fastener 10 comprising a body 12 having head 14 neck 16 and base 20. Neck 16 comprises a surface 18, the purpose of which is described later, and is of a narrower diameter than head 14 and base 20. A through-bore 22 is provided in base 20 for receiving spring member 24.

Spring member 24 comprises an angled end 26 a bent end 28, and a holding portion 25.

From figure 6, it can be seen that body 12 comprises a slot 30 in head 14 for receiving a tool in order to enable rotation of the fastener in use.

In order to assemble fastener 10 an incompletely formed spring member 24 is passed through bore 22 so that ends protrude through body 12 at each end of bore 22. For example, spring member 24 can have one of ends 28 or 26 formed thereon before passing the other end through bore 22 until that other end protrudes through the body. That other end is then formed. In the case of angled end 26, the member 24 can be cut or crimped whilst end 28 requires bending and rounding of its edges.

Preferably, spring member 24 is formed from a spring wire such as spring steel. Also, body 12 is preferably formed of metal such as aluminum or mazak to enable a fire resistant installation and also to assist in providing an electrically conductive installation. Both ends 26 and 28 prevent removal of the member 24 from body 12. If end 26 is cut close to body 12 it can cause local distortion of the spring member to provide for a holding member to effectively clamp the member in position in the through-bore. In this circumstance a separate holding portion 25 may not be required.

After assembly of fastener 10, end 28 of spring clip 24 is passed through an aperture A in a lid L. Surface 18 of neck 16 is positioned against the rim of aperture A and the fastener 10 is pushed through the aperture against the resistance of angled end 26 of spring clip 24. The angled nature of end 26 enables a camming action when inserting the fastener into an appeture. Accordingly, the distance between the outermost part of end 26 and surface 18 of neck 16, can be at most approximately the same as the diameter of aperture A. In this way, the fastener 10 clips into position in the aperture and spring member 24 inhibits removal from the aperture. By rotation of body 12 within the aperture from a released position to an engaged position, end 28 of the spring member 24 can be brought into abutment with a panel P which is thereby fastened against lid L due to co-operation of spring member 24 through body 12 with head 14 in abutment with lid L. The tip of end 28 can be rounded or profiled (29) to ease movement between an engaged and released position.

Preferably end 26 has a relatively sharp point or edge which can score panel L when the turnbuckle is rotated to cut through any painted or otherwise electrically insulated layer on the adjacent surface of panel L to provide for an electrically conductive path between the spring member 24 and the panel L.

In further embodiments the through-bore 22 need not be of a circular cross-section and the spring member 24 also need not have a circular cross-section. In a preferred embodiment the through-bore 22 and the spring member 24 both have a square cross-section. This ensures that when the turnbuckle is moved from a released position to an engaged position the spring member 24 does not rotate within its bore.

Preferably the bore can be formed by using a core in a moulding process. Such cores typically have a small relief angle eg. less than 5 degrees included angle to assist in removal of the core from the bore prior to ejection of the body from the moulding machine. The relief angle provides for a tapered bore, the larger end of which can be beneficially used to assist alignment of the spring member prior to insertion of the spring member into the bore.

A preferred method of assembling the spring member into the body is as follows:-
a) The spring member is initially provided as a continuous length of wire.
b) A first end of the length of wire is pushed through the through-bore 22 until the first end projects further from the end of the through-bore than when the turnbuckle is in a finished condition.
c) The first end is then formed for example by providing a bent portion 28.
d) A portion of the wire intermediate the formed end and body portion of the turnbuckle is machined to provide a holding means 25 by local widening of the spring member eg by crimping. Alternative holding means are also possible such as a shallow bend, a joggle, knurling etc.
e) The length of wire is then pulled such that the holding portion is moved back towards an into engagement with the through-bore and the first end is correctly positioned relative to the body portion.
f) A second end of the spring member is then formed by cropping from the remaining length of wire and then forming to provide angled end 26.

It should be appreciated that the forming of the first end and holding portion can be performed in any order or even simultaneously. Also the second end can be cropped and formed in a single operation. The first and second ends can be formed to produce any desired arrangement eg. the first end can be formed to produce a bend 28 or an angled section 26 following which the second end can be formed to produce an angled portion 26 or a bend 28 as appropriate.

## Claims

1. A turnbuckle fastener (10) for use in securing a first part to a second part, comprising a body (12) which is operatively angularly free to rotate in a hole in the first part and having a head (14) abutting a face of the first part in use, the body including a cross through-bore (22) for receiving a spring member and a laterally projecting spring member (24) for abutting the second part in use thereby to fasten the first and second parts together in co-operation with the head, wherein the spring member includes means (25) for holding it in position with respect to the body.

2. A fastener as defined in claim 1 in which the spring member is formed from an elongate member.

3. A fastener as defined in claims 1 or 2 in which the spring member has a circular or square cross-section.

4. A fastener as defined in any one of claims 1-3 in which the through-bore has a circular or square cross-section.

5. A fastener as defined in any previous claim in which the through-bore is formed in a moulding process with a relief angle.

6. A fastener as defined in any previous claim in which the spring member has one end (26) formed to produce a relatively sharp edge or point.

7. A fastener as defined in claim 6 in which the one end (26) is angled so as to assist assembly of the fastener into the hole.

8. A fastener as defined in any previous claim in which the spring member has another end (28) bent towards the head.

9. A fastener as defined in claim 8 in which the other end has profiled edges (29) to help engagement with the second part.

10. A fastener as defined in any previous claim in which the holding means (25) comprise a deformed portion (25) of the spring member.

11. A fastener as defined in claim 10 in which the deformed portion is formed by a shallow bend, joggle, crimping or local widening (25) of the spring member.

12. A fastener as defined in any preceding claim in which the holding means co-operates with part of the body adjacent one end of the through-bore.

13. A method of assembling a turnbuckle fastener (10) for fastening first and second parts, the fastener having a body (12) with a through-bore (22) and a spring member (24) with first and second ends, the method of assembly comprising the steps of passing the spring member through the bore so that the first end projects from the bore, then forming at least one of the first or second ends to form an engaging portion to co-operate with the associated first or second part to be secured together.

14. The method of claim 13 wherein the forming provides for a means for holding the spring member in the body.

15. The method of claim 13 or 14 wherein the first end and a mid-portion of the spring member from the bore and the mid-portion is formed to provide the holding means, (25) following which at least a section of the mid-portion is positioned in the through-bore.

16. The method of claim 15 in which the positioning is achieved by applying a force to the second end.

17. A method of assembling a turnbuckle fastener whereby steps of any one of Claims 13 to 16 are carried out whilst the second end is still attached to a length of wire.

18. The method of claim 17 in which a tensile force is applied to the length of wire.

19. The method of claim 17 or 18 following which the length of wire is parted from the second end.

20. The method of claim 19 following which the second end is formed to form an engaging portion to co-operate with an associated first or second part to be secured together.

21. A turnbuckle fastener (10) comprising a body (12) with a head (14) and through-bore (22), and a spring member (24) wherein the body and spring member are made of metal.

22. A turnbuckle fastener (10) as defined in claim 21 wherein the body is made from a castable material such as aluminium or mazak or the spring member is made from spring wire such as spring steel.

23. A turnbuckle fastener (10)with a body having a head and a base with through-bore, and a spring member, wherein the body further comprises a neck portion (18) disposed between the through-bore and head (14) which neck portion has a narrower cross-sectional diameter than the head.

24. A turnbuckle fastener as defined in claim 23 in which the neck portion has a narrower cross-sectional diameter than that portion of the body (20) including the through-bore.
